# EUROPÄISCHE PATENTSCHRIFT

(11) **EP 2 069 730 B1**
(45) Veröffentlichungstag und Bekanntmachung des Hinweises auf die Patenterteilung: **15.12.2010**
(21) Anmeldenummer: 07820864.2
(22) Anmeldetag: 02.10.2007
(51) Int. Cl.: G01F 23/24, G01F 23/26

(54) **VORRICHTUNG ZUR BESTIMMUNG UND/ODER ÜBERWACHUNG EINER PROZESSGRÖSSE**
APPARATUS FOR DETERMINING AND/OR MONITORING A PROCESS VARIABLE
DISPOSITIF DE DETERMINATION ET/OU DE SURVEILLANCE D'UNE GRANDEUR DE PROCEDE

(30) Priorität: 06.10.2006 DE 102006047780
(43) Veröffentlichungstag der Anmeldung: 17.06.2009
(73) Patentinhaber: Endress+Hauser GmbH+Co. KG, 79689 Maulburg (DE)
(72) Erfinder: DIETERLE, Roland, 79539 Lörrach (DE); UPPENKAMP, Kaj, 79664 WEHR (DE); WERNET, Armin, 79618 Rheinfelden (DE)
(74) Vertreter: Andres, Angelika Maria
(86) Internationale Anmeldenummer: PCT/EP2007/060483
(87) Internationale Veröffentlichungsnummer: WO 2008/040746

(56) Entgegenhaltungen:
- EP-A- 0 766 398
- DE-A1- 3 212 434
- US-A- 3 706 980

## Beschreibung

Die Erfindung bezieht sich auf eine Vorrichtung zur Bestimmung und/oder Überwachung mindestens einer Prozessgröße eines Mediums in einem Behälter, mit mindestens einer Sondeneinheit, welche mindestens eine Sensorelektrode und eine Guardelektrode aufweist, und mit mindestens einer Elektronikeinheit, welche die Sensorelektrode mit einem Ansteuersignal beaufschlagt und welche die Guardelektrode mit einem Guardsignal beaufschlagt. Bei der Prozessgröße handelt es sich beispielsweise um den Füllstand.

Im Stand der Technik ist es bekannt, den Füllstand eines Mediums zu überwachen, indem erkannt wird, ob durch das leitfähige Medium ein elektrischer Kontakt zwischen einer Sondenelektrode und der Wandung eines leitfähigen Behälters oder einer zweiten Elektrode besteht. Da es bei vielen Medien zu einem Ansatz an der Sondeneinheit kommen kann, werden sog. Guardelektroden verwendet, welche auf dem gleichen elektrischen Potential wie die Sondenelektrode liegen und die Sondenelektrode umgeben (siehe z.B. DE 32 12 434 C2). Je nach Besdhaffenheit des Ansatzes ist es jedoch möglich, dass es Schwierigkeiten gibt, das Guardsignal passend zu erzeugen.

Somit besteht die Aufgabe der Erfindung darin, ein Messgerät vorzuschlagen, bei welchem über einen großen Bereich hinweg eine Unempfindlichkeit gegenüber Ansatz gegeben ist.

Die Erfindung löst die Aufgabe dadurch, dass mindestens eine Verstärkungseinheit vorgesehen ist, dass mindestens ein Begrenzungselement vorgesehen ist, welches in Serie zwischen dem Ausgang der Verstärkungseinheit und der Guardelektrode angeordnet ist, wobei die Verstärkungseinheit über das Begrenzungselement die Guardelektrode mit dem Guardsignal beaufschlagt, und wobei die Verstärkungseinheit über das Begrenzungselement die Sensorelektrode mit dem Ansteuersignal beaufschlagt, und dass mindestens eine Auswerteeinheit vorgesehen ist, welche ausgehend von einem an der Sensorelektrode abgreifbaren Stromsignal und dem Ansteuersignal und/oder dem Guardsignal die Prozessgröße bestimmt und/oder überwacht. Die Verstärkungseinheit, welche das Guardsignal erzeugt, wird erfindungsgemäß durch ein Beschränkungselement, bei welchem es sich beispielsweise, jedoch nicht notwendigerweise um einen ohmschen Widerstand handelt, beschränkt. Dies bewirkt, dass es beispielsweise keinen Sättigungseffekt geben kann. Dieses derartig in seiner Amplitude beschränkte Signal wird dann als Anregungssignal auf die Sondenelektrode gegeben. Von der Sondenelektrode wird anschließend ein Stromsignal angegriffen, welches in Verbindung mit dem Ansteuersignal oder dem Guardsignal in Hinsicht auf die Prozessgröße ausgewertet wird. Dabei ist eine konduktive oder eine kapazitive Auswertung möglich, wobei ggf. auch die Phase zwischen den beiden Signalen verwendet wird. In einer Ausgestaltung ist das Ansteuersignal identisch mit dem Guardsignal. Weiterhin ist es für die Anwendung des Guards vorteilhaft, wenn die Guardelektrode die Sensorelektrode dort umgibt, wo sich der Ansatz bilden kann. In einer Ausgestaltung ist daher vorgesehen, dass die Guardelektrode die Sensorelektrode im dem Medium zugewandten Bereich der Sondeneinheit koaxial umgibt.

Eine Ausgestaltung sieht vor, dass der Verstärkungsfaktor der Verstärkungseinheit einen im Wesentlichen zeitlich konstanten Wert hat. Die Verstärkung ist in einer Ausgestaltung gleich eins eingestellt.

Eine Ausgestaltung beinhaltet, dass mindestens ein Messwiderstand vorgesehen ist, über welchen das Stromsignal abgegriffen wird.

Eine Ausgestaltung sieht vor, dass mindestens eine Trennungseinheit vorgesehen ist, deren Eingang mit dem Begrenzungselement und deren Ausgang mit der Sensorelektrode elektrisch verbunden ist, wobei die Trennungseinheit derartig ausgestaltet ist, dass die Trennungseinheit Auswirkungen einer elektrischen Schalung, welche mit dem Ausgang der Trennungseinheit verbunden ist, auf eine elektrische Schaltung, welche mit dem Eingang der Trennungseinheit verbunden ist, im Wesentlichen verhindert. Die Elektronikeinheit lässt sich funktionell in mindestens zwei Schalungen oder Teilsdialtungen geteilt denken. Zum einen ist dies der Teil der Guardelektrode und zum anderen der Teil der Sensorelektrode. Wie bereits oben beschrieben wird im Wesentlichen zuerst der Guard-Abschnitt mit dem Guardsignal beaufschlagt und dann der Sensor-Abschnitt, der das gleiche Signal erhält. Durch die Trennungseinheit wird sichergestellt, dass die Teilschaltung mit der Sensorelektrode keine Auswirkungen auf die Guardelektroden-Teilschaltung hat, d.h. es wird Rückwirkungsfreiheit erzeugt.

Eine Ausgestaltung beinhaltet, dass es sich bei der Trennungseinheit um eine Verstärkungseinheit handelt. In einer Ausgestaltung ist der Verstärkungsfaktor dieses Verstärkers gleich eins gesetzt.

Eine Ausgestaltung sieht vor, dass mindestens ein Sondenstrombegrenzungselement vorgesehen ist, welches zwischen dem Ausgang der Trennungseinheit und der Sensorelektrode angeordnet ist und welches den über die Sensorelektrode fließenden Strom beschränkt.

Eine Ausgestaltung beinhaltet, dass der Behälter zumindest teilweise als Masseelektrode ausgestaltet ist. Alternativ ist eine zweite Elektrode als Gegenelektrode vorgesehen, welche entweder zusätzlich in den Behälter eingebracht oder welche ein Teil der Sondeneinheit ist.

Eine Ausgestaltung sieht vor, dass es sich bei dem Begrenzungselement um einen ohmschen Widerstand handelt, und/oder dass es sich bei dem Sondenstrombegrenzungselement um einen ohmschen Widerstand handelt.

Eine Ausgestaltung beinhaltet, dass mindestens eine Signalquelle vorgesehen ist, welche mit dem Eingang der ersten Verstärkungseinheit verbunden ist.

Eine Ausgestaltung sieht vor, dass es sich bei dem Guardsignal und bei dem Ansteuersignal um eine elektrische Wechselspannung handelt.

Eine Ausgestaltung beinhaltet, dass die Auswerteeinheit derartig ausgestaltet ist, dass die Auswerteeinheit mindestens das Guardsignal und/oder das Ansteuersignal digitalisiert. Diese Digitalisierung ermöglicht es beispielsweise, die Phase zwischen dem Ansteuersignal oder dem Guardsignal und dem Stromsignal bzw. einem zum Stromsignal proportionalen Spannungssignal zu bestimmen. Weiterhin ist die Signalverarbeitung deutlich einfacher.

Eine Ausgestaltung sieht vor, dass die Auswerteeinheit derartig ausgestaltet ist, dass die Auswerteeinheit mindestens ein Amplitudenverhältnis aus dem Guardsignal und/ oder dem Ansteuersignal und dem Stromsignal und/oder einem davon abhängigen elektrischen Spannungssignal ermittelt, und dass die Auswerteeinheit aufgrund des Amplitudenverhältnisses die Prozessgröße bestimmt und/oder überwacht.

Eine Ausgestaltung beinhaltet, dass es sich bei der Prozessgröße um den Füllstand des Mediums handelt.

Die Erfindung wird anhand der nachfolgenden Zeichnungen näher erläutert. Es zeigt:

Fig. 1: eine schematische Darstellung eines Messgerätes gemäß dem Stand der Technik,

Fig. 2: eine schematische Darstellung eines erfindungsgemäßen Messgerätes, und

Fig. 3: eine graphische Darstellung der Amplitudenverhältnisse von Signalen bei der Messung von unterschiedlichen Medien.

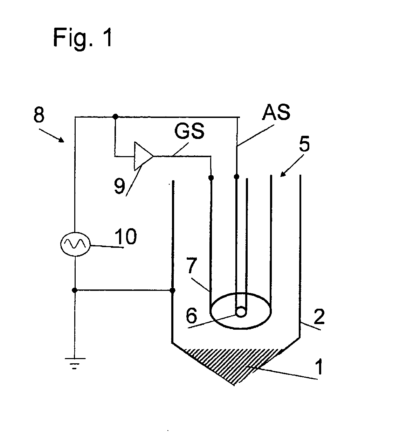

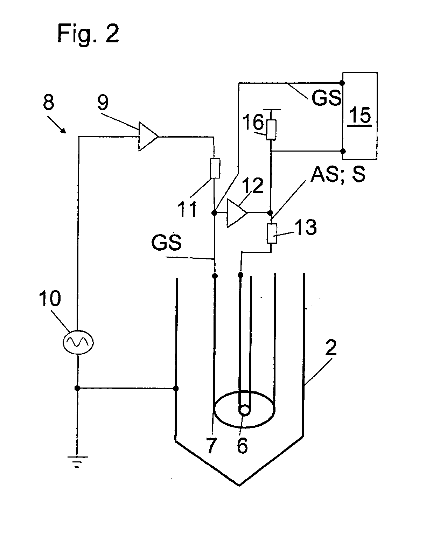

In der Fig. 1 wird der Füllstand eines Mediums 1 innerhalb eines Behälters 2 überwacht. Bei dem Medium 1 handelt es sich dabei vorzugsweise um eine elektrisch leitfähige Flüssigkeit. Die Anwendung bei elektrisch nicht-leitfähigen Medien ist ebenfalls möglich. Das Messgerät besteht aus einer Elektronikeinheit 8 und einer Sondeneinheit 5. In der praktischen Ausgestaltung ist die Sondeneinheit 5 dabei vorzugsweise derartig in die Wandung des Behälters 2 eingebaut, dass die Wandung direkt mit ihr abschließt, so dass also die Sonde 5 nicht in den Behälter 2 hineinragt. Diese konstruktive Ausgestaltung ist dabei vorzugsweise auch für das in Fig. 2 beispielhaft gezeigte erfindungsgemäße Messgerät vorgesehen. Bei dem Behälter 2 handelt es sich beispielsweise auch um ein Rohr, durch welches das Medium 1 strömt - unter Behälter sei somit jegliche Art von Struktur verstanden, welche ein Medium zumindest zeitweise aufnimmt. Die Wandung des Behälters 2 ist hier als Masseelektrode ausgestaltet, d.h. sie ist elektrisch leitend mit einem Massepotential verbunden. Alternativ wird eine zweite Elektrode in den Behälter 2 eingebracht. Ebenfalls mit Masse ist eine Signalquelle 10 verbunden, welche insbesondere ein elektrisches Wechselspannungssignal als Ansteuersignal AS erzeugt. Dieses Signal AS wird an die Sensorelektrode 6 gegeben. Ereicht das - elektrisch leitfähige - Medium 1 einen Füllstand, der durch die Ausgestaltung der Sondeneinheit 5 und dessen Position innerhalb oder an dem Behälter 2 vorgegeben ist, so wird ein elektrischer Kontakt zwischen der Sensorelektrode 6 und der Wandung des Behälters 2 hergestellt, was dazu führt, dass sich beispielsweise der Strom, welcher sich von der Sensorelektrode 6 abgreifen lässt, ändert. Eine Problematik tritt auf, wenn beispielsweise das Medium 1 sich wieder absenkt und dabei Medium 1 an der Sondeneinheit 5 als Ansatz haften bleibt. Ist beispielsweise die gesamte Wandung des Behälters 2 elektrisch leitend mit Masse verbunden und erstreckt sich der Ansatz von der Sensorelektrode 6 bis zur Wandung, so erfolgt eine Falschanzeige, da immer noch der Bedeckt-Zustand angezeigt wird. Um dieser Ansatzproblematik zu entgehen, ist die sog. Guardelektrode 7 vorgesehen, welche vorzugsweise die Sensorelektrode 6 koaxial zumindest in dem Bereich, in welchem die Sensorelektrode in Kontakt mit dem Medium 1 kommt, umgibt (dies gilt auch für das erfindungsgemäße ausgestaltete Messgerät). Zwischen der Sensorelektrode 6 und der Guardelektrode 7 ist dabei üblicherweise ein Isolator in der Sondeneinheit 5 vorgesehen. Diese Guardelektrode 7 wird hier über eine erste Verstärkungseinheit 9 mit einem Guardsignal GS beaufschlagt. Dabei haben das Ansteuersignal AS und das Guardsignal GS vorzugsweise im Wesentlichen die gleiche Phase und die gleiche Amplitude. Befindet sich Ansatz an der Sondeneinheit 5, so treibt die Guardelektrode 7 einen Wechselstrom zur Gegenelektrode (dies ist hier beispielsweise die geerdete Wandung des Behälters 2 oder in einer alternativen Ausgestaltung eine zweite zusätzliche Elektrode) und hebt den elektrodenbedeckenden Ansatz auf das Guardpotenial. Ein Stromfluss von der Sondenelektrode 6 zur Gegenelektrode 2 wird somit vermieden und ein Frei-Signal wird erzeugt, insofern die Sensorelektrode 6 nicht durch das Medium bedeckt ist. Eine Problematik besteht jedoch im Stand der Technik üblicherweise darin, dass die Verstärkungseinheit 9 durch ihren Innenwiderstand nur begrenzt Strom liefern kann und somit bei leitfähigen Ansätzen das Guardpotential nicht aufrechterhalten kann. Ein Stromfluss von der Sondenelektrode 6 zur Gegenelektrode 2 - dies ist hier die Wandung - ist die Folge und ein Bedeckt-Signal wird erzeugt.

Diese Problematik löst ein erfindungsgemäßes Messgerät, wie es in der Fig. 2 dargestellt ist. Von der Elektronikeinheit 8 sind hierbei wieder nur die für die Erklärung der Funktion wesentlichen Bestandteile gezeigt. Das Signal der Signalquelle 10 wird hier über die Verstärkungseinheit 9 über ein Begrenzungselement 11 auf die Guardelektrode 7 gegeben. Bei dem Begrenzungselement 11 handelt es sich dabei in der hier gezeigten Ausgestaltung um einen ohmschen Widerstand. Als Beispiel sei genannt, dass die Verstärkungseinheit 9 einen Innenwiderstand zwischen 50 und 200 W aufweist. Der Widerstand des Begrenzungselements 11 ist größer als der Innenwiderstand der Verstärkungseinheit 9 zu wählen. Durch das Begrenzungselement 11 wird verhindert, dass der Verstärker 9 in die Begrenzung kommt. Das Guardsignal GS wird für die Auswertung bzw. Bestimmung des Füllstandes der Auswerteeinheit 15 zugeführt, wo das Signal GS beispielsweise durch einen Analog-Digital-Wandler, welcher ggf. auch Bestandteil eines Mikroprozessors ist, digitalisiert wird. Weiterhin wird das Guardsignal GS einer Verstärkungseinheit zugeführt, welche hier als Trennungseinheit 12 zur Verhinderung der Rückwirkung dient. Die Verstärkung dieser Trenneinheit 12 ist beispielsweise gleich Eins gesetzt. Das Guardsignal GS erreicht dann über das Sondenstrombegrenzungselement 13 als Ansteuersignal AS die Sensorelektrode 6. Bei dem Sondenstrombegrenzungselement 13 handelt es sich dabei vorzugsweise auch um einen ohmschen Widerstand, welcher verhindert, dass der Sondenstrom bei sehr leitfähigen Medien zu groß wird und damit beispielsweise außerhalb des Bereichs des Analog/Digitalwandlers liegt. Das Ansteuersignal AS wird ggf. auch der Auswerteeinheit 15 zugeführt, um beispielsweise ebenfalls digitalisiert zu werden. Unterscheiden sich das Guardsignal GS und das Ansteuersignal AS nicht, weil beispielsweise die Trennungseinheit 12 eine Verstärkung von eins hat und auch sonst keine Änderungen am Guardsignal GS vornimmt, so reicht es, wenn nur eins der beiden Spannungssignale GS bzw. AS an die Auswerteeinheit 15 übertragen wird. Bei der Auswertung wird in einer Ausgestaltung das Verhältnis zwischen dem Guardsignal GS bzw. dem Ansteuersignal AS als Referenzsignal und dem Stromsignal S bzw. einer dazu proportionalen Spannung ausgewertet bzw. es wird die Sondenimpedanz bestimmt und verarbeitet. Bei zunehmender Belastung an der Guardelektrode 7 wird zwar die Messspannung an der Sensorelektrode 6 reduziert, jedoch können Grenzstände bzw. Ansätze bis nahezu 0 W sicher detektiert werden. Überdies erlaubt eine Digitalisierung auch eine genaue Phasenbestimmung, so dass sich auch konduktive oder kapazitive Messungen durchführen lassen. Somit lässt sich entweder der Real- bzw. Imaginärteil bestimmen. Beide Werte erlauben die Bestimmung des Füllstandes oder das Erreichen bzw. Unterschreiten eines vorbestimmten Füllstandes.

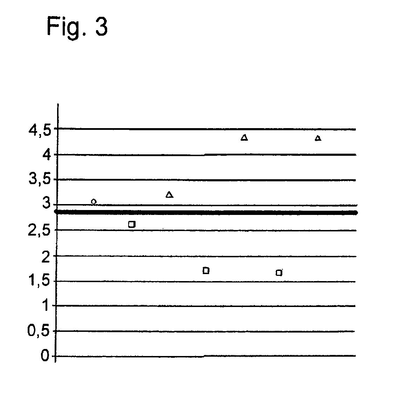

In der Fig. 3 sind unterschiedliche Verhältniszahlen zwischen dem Referenzsignal GS und einer zum Sondenstrom S proportionalen Spannung dargestellt. Die Messungen beziehen sich dabei - von links nach rechtes - auf Luft, Bedeckung durch Wasser, Wasser-Ansatz ohne Bedeckung, Bedeckung durch Shampoo, Shampoo-Ansatz ohne Bedeckung, Bedeckung durch Senf und Senf-Ansatz ohne Bedeckung.

Die Schaltschwelle ist als dicker Strich auf Höhe eines Verhältnisses von 2,85 angesetzt. Die drei unteren Messpunkte (Rechteck-Symbol) zeigen jeweils das Verhältnis der Werte, wenn das Sensorelement von einem bestimmten Ansatz bedeckt ist. Die drei oberen dreiecksförmigen Messpunkte zeigen die Situation, dass das Medium den Füllstand erreicht hat und die Sensorelektrode bedeckt. Vergleicht man jeweils die einander zugeordneten Punkte (d.h. jeweils Wasser oder jeweils Shampoo), so zeigt sich, dass der Abstand zwischen den Punkten stets ausreichend groß ist, so dass sich bequem eine Schaltschwelle angeben lässt, deren Überschreiten zu einer Anzeige des Erreichens des Füllstands führt. Umgekehrt ist auch das Unterschreiten des Füllstandes gut genug zu erkennen und dies insbesondere auch beim Vorliegen von Ansatz.

**Bezugszeichenliste**

**Tabelle 1**

| | |
|---|---|
| 1 | Medium |
| 2 | Behälter |
| 5 | Sondeneinheit |
| 6 | Sensorelektrode |
| 7 | Guardelektrode |
| 8 | Elektronikeinheit |
| 9 | Verstärkungseinheit |
| 10 | Signalquelle |
| 11 | Begrenzungselement |
| 12 | Trennungseinheit |
| 13 | Sondenstrombegrenzungselement |
| 15 | Auswerteeinheit |
| 16 | Messwiderstand |
| AS | Ansteuersignal |
| GS | Guardsignal |
| S | Stromsignal |

## Patentansprüche

1. Vorrichtung zur Bestimmung und/oder Überwachung mindestens einer Prozessgröße eines Mediums (1) in einem Behälter (2), mit mindestens einer Sondeneinheit (5), welche mindestens eine Sensorelektrode (6) und eine Guardelektrode (7) aufweist, und mit mindestens einer Elektronikeinheit (8), welche die Sensorelektrode (6) mit einem Ansteuersignal (AS) beaufschlagt und welche die Guardelektrode (7) mit einem Guardsignal (GS) beaufschlagt, und mit mindestens einer Auswerteeinheit **dadurch gekennzeichnet, dass** mindestens eine Verstärkungseinheit (9) vorgesehen ist, dass mindestens ein Begrenzungselement (11) vorgesehen ist, welches in Serie zwischen dem Ausgang der Verstärkungseinheit (9) und der Guardelektrode (7) angeordnet ist, wobei die Verstärkungseinheit (9) über das Begrenzungselement (11) die Guardelektrode (7) mit dem Guardsignal (GS) beaufschlagt, und wobei die Verstärkungseinheit (9) über das Begrenzungselement (11) die Sensorelektrode (6) mit dem Ansteuersignal (AS) beaufschlagt, und wobei die Auswerteeinheit (15) ausgehend von einem an der Sensorelektrode (6) abgreifbaren Stromsignal (S) und dem Ansteuersignal (AS) und/oder dem Guardsignal (GS) die Prozessgröße bestimmt und/oder überwacht.

2. Vorrichtung nach Anspruch 1, **dadurch gekennzeichnet, dass** der Verstärkungsfaktor der Verstärkungseinheit (9) einen im Wesentlichen zeitlich konstanten Wert hat.

3. Vorrichtung nach Anspruch 1 oder 2, **dadurch gekennzeichnet, dass** mindestens ein Messwiderstand (16) vorgesehen ist, über welchen das Stromsignal (S) angegriffen wird.

4. Vorrichtung nach mindestens einem des Ansprüche 1 bis 3, **dadurch gekennzeichnet, dass** mindestens eine Trennungseinheit (12) vorgesehen ist, deren Eingang mit dem Begrenzungselement (11) und deren Ausgang mit der Sensorelektrode (6) elektrisch verbunden ist, wobei die Trennungseinheit (12) derartig ausgestaltet ist, dass die Trennungseinheit (12) Auswirkungen einer elektrischen Schaltung, welche mit dem Ausgang der Trennungseinheit (12) verbunden ist, auf eine elektrische Schaltung, welche mit dem Eingang der Trennungseinheit (12) verbunden ist, im Wesentlichen verhindert.

5. Vorrichtung nach Anspruch 4, **dadurch gekennzeichnet, dass** es sich bei der Trennungseinheit (12) um eine Verstärkungseinheit handelt.

6. Vorrichtung nach mindestens einem der Ansprüche 1 bis 5, **dadurch gekennzeichnet, dass** mindestens ein Sondenstrombegrenzungselement (13) vorgesehen ist, welches zwischen dem Ausgang der Trennungseinheit (12) und der Sensorelektrode (6) angeordnet ist und welches der über die Sensorelektrode (6) fließenden Strom beschränkt.

7. Vorrichtung nach mindestens einem der Ansprüche 1 bis 6, **dadurch gekennzeichnet, dass** der Behälter (2) zumindest teilweise als Masseedektrode ausgestaltet ist.

8. Vorrichtung nach mindestens einem der Ansprüche 1 bis 7, **dadurch gekennzeichnet, dass** es sich bei dem Begrenzungselement (11) um einen ohmschen Widerstand handelt, und/oder dass es sich bei dem Sondenstrombegrenzungselement (13) um einen ohmschen Widerstand handelt.

9. Vorrichtung nach mindestens einem der Ansprüche 1 bis 8, **dadurch gekennzeichnet, dass** mindestens eine Signalquelle (10) vorgesehen ist, weiche mit dem Eingang der ersten Verstärkungseinheit (9) verbunden ist.

10. Vorrichtung nach mindestens einem der Ansprüche 1 bis 9, **dadurch gekennzeichnet, dass** es sich bei dem Guardsignal (GS) und bei dem Ansteuersignal (AS) um eine elektrische Wechselspannung handelt.

11. Vorrichtung nach mindestens einem der Ansprüche 1 bis 10, **dadurch gekennzeichnet, dass** die Auswerteeinheit (15) derartig ausgestaltet ist, dass die Auswerteeinheit mindestens das Guardsignal (GS) und/oder das Ansteuersignal (AS) digitalisiert.

12. Vorrichtung nach mindestens einem der Ansprüche 1 bis 11, **dadurch gekennzeichnet, dass** die Auswerteeinheit (15) derartig ausgestaltet ist, dass die Auswerteeinheit (15) mindestens ein Amplitudenverhältnis aus dem Guardsignal (GS) und/oder dem Ansteuersignal (AS) und dem Stromsignal (S) und/oder einem davon abhängigen elektrischen Spannungssignal ermittelt, und dass die Auswerteeinheit (15) aufgrund des Amplitudenverhältnisses die Prozessgröße bestimmt und/oder überwacht.

13. Vorrichtung nach mindestens einem der Ansprüche 1 bis 12, **dadurch gekennzeichnet, dass** es sich bei der Prozessgröße um der Füllstand des Mediums (1) handelt.

## Claims

1. Unit for determining and/or monitoring at least one process variable of a medium (1) in a container (2) with at least one probe unit (5) which has at least one sensor electrode (6) and one guard electrode (7), and with at least one electronic unit (8) which causes a control signal (AS) to act on the sensor electrode (6) and which causes a guard signal (GS) to act on the guard electrode (7), and with at least one evaluation unit, **characterized in that** at least one amplification unit (9) is provided, and **characterized in that** at least one limiting element (11) is provided, which is arranged in series between the output of the amplification unit (9) and the guard electrode (7), where the amplification unit (9) causes the guard signal (GS) to act on the guard electrode (7) via the limiting element (11), and where the amplification unit (9) causes the control signal (AS) to act on the sensor electrode (6) via the limiting element (11), and where the evaluation unit (15) determines and/or monitors the process variable based on a current signal (S), which can be measured at the sensor electrode (6), and the control signal (AS) and/or the guard signal (GS).

2. Unit as per Claim 1, **characterized in that** the amplification factor of the amplification unit (9) has a primarily constant value.

3. Unit as per Claim 1 or 2, **characterized in that** at least one measuring resistor (16) is provided via which the current signal (S) is measured.

4. Unit as per at least one of the Claims 1 to 3, **characterized in that** at least one isolation unit (12) is provided whose input is electrically connected to the limiting element (11) and whose output is electrically connected to the sensor electrode (6), where the isolation unit (12) is designed in such a way that the isolation unit (12) primarily prevents an electrical circuit, which is connected to the output of the isolation unit (12), from impacting an electrical circuit which is connected to the input of the isolation unit (12).

5. Unit as per Claim 4, **characterized in that** the isolation unit (12) is an amplification unit.

6. Unit as per at least one of the Claims 1 to 5, **characterized in that** at least one probe current limiting element (13) is provided which is arranged between the output of the isolation unit (12) and the sensor electrode (6), and which limits the current flowing via the sensor electrode (6).

7. Unit as per at least one of the Claims 1 to 6, **characterized in that** the container (2) is at least partly designed as a ground electrode.

8. Unit as per at least one of the Claims 1 to 7, **characterized in that** the limiting element (11) is an ohmic resistor, and/or that the probe current limiting element (13) is an ohmic resistor.

9. Unit as per at least one of the Claims 1 to 8, **characterized in that** at least one single source (10) is provided which is connected to the input of the first amplification unit (9).

10. Unit as per at least one of the Claims 1 to 9, **characterized in that** the guard signal (GS) and the control signal (AS) is an electrical alternating voltage.

11. Unit as per at least one of the Claims 1 to 10, **characterized in that** the evaluation unit (15) is designed in such a way that the evaluation unit digitizes at least the guard signal (GS) and/or the control signal (AS).

12. Unit as per at least one of the Claims 1 to 11, **characterized in that** the evaluation unit (15) is designed in such a way that the evaluation unit (15) determines at least an amplitude ratio from the guard signal (GS) and/or the control signal (AS) and the current signal (S) and/or an electrical voltage signal which depends on this, and **characterized in that** the evaluation unit (15) determines and/or monitors the process variable on the basis of the amplitude ratio.

13. Unit as per at least one of the Claims 1 to 12, **characterized in that** the process variable is the level of the medium (1).

## Revendications

1. Dispositif destiné à la détermination et/ou la surveillance d'au moins une grandeur de process d'un produit (1) au sein d'un réservoir (2), avec au moins une unité de sonde (5), laquelle comporte au moins une électrode de sonde (6) et une électrode de garde (7), et avec au moins une unité électronique (8), qui alimente l'électrode de sonde (6) avec un signal de commande (AS) et qui alimente l'électrode de garde (7) avec un signal de garde (GS), et avec au moins une unité d'exploitation (15),
**caractérisé en ce qu'**est prévue au moins une unité d'amplification (9), qu'est prévu au moins un élément de limitation (11), lequel est disposé en série entre la sortie de l'unité d'amplification (9) et l'électrode de garde (7), l'unité d'amplification (9) alimentant l'électrode de garde (7) avec le signal de garde (GS) par l'intermédiaire de l'élément de limitation (11), et l'unité d'amplification (9) alimentant l'électrode de capteur (6) avec le signal de commande (AS) par l'intermédiaire de l'élément de limitation (11), et l'unité d'exploitation (15) déterminant et/ou surveillant la grandeur de process sur la base d'un signal de courant (S), pouvant être prélevé sur l'électrode de capteur (6), et du signal de commande (AS) et/ou du signal de garde (GS).

2. Dispositif selon la revendication 1, **caractérisé en ce que** le facteur d'amplification de l'unité d'amplification (9) présente une valeur pour l'essentiel constante dans le temps.

3. Dispositif selon la revendication 1 ou 2, **caractérisé en ce qu'**est prévue au moins une résistance de mesure (16), par l'intermédiaire de laquelle le signal de courant (S) est prélevé.

4. Dispositif selon au moins l'une des revendications 1 à 3, **caractérisé en ce qu'**est prévue au moins une unité de séparation (12), dont l'entrée est reliée électriquement avec l'élément de limitation (11) et dont la sortie est reliée avec l'électrode de capteur (6), l'unité de séparation (12) étant conçue de telle manière que l'unité de séparation (12) empêche pour l'essentiel les effets d'une commutation électrique, laquelle est reliée avec la sortie de l'unité de séparation (12), sur une commutation électrique, laquelle est reliée avec l'entrée de l'unité de séparation (12).

5. Dispositif selon la revendication 4, **caractérisé en ce que**, concernant l'unité de séparation (12), il s'agit d'une unité d'amplification.

6. Dispositif selon au moins l'une des revendications 1 à 5, **caractérisé en ce qu'**est prévu au moins un élément de limitation du courant de sonde (13), lequel est disposé entre la sortie de l'unité de séparation (12) et l'électrode de capteur (6) et lequel limite le courant circulant à travers l'électrode de capteur (6).

7. Dispositif selon au moins l'une des revendications 1 à 6, **caractérisé en ce que** le réservoir (2) est conçu au moins partiellement en tant qu'électrode de masse.

8. Dispositif selon au moins l'une des revendications 1 à 7, **caractérisé en ce que**, concernant l'élément de limitation (11), il s'agit d'une résistance ohmique, et/ou que, concernant l'élément de limitation du courant de sonde (13), il s'agit d'une résistance ohmique.

9. Dispositif selon au moins l'une des revendications 1 à 8, **caractérisé en ce qu'**est prévue au moins une source de signal (10), laquelle est reliée avec l'entrée de la première unité d'amplification (9).

10. Dispositif selon au moins l'une des revendications 1 à 9, **caractérisé en ce que**, concernant le signal de garde (GS) et concernant le signal de commande (AS), il s'agit d'une tension électrique alternative.

11. Dispositif selon au moins l'une des revendications 1 à 10, **caractérisé en ce que** l'unité d'exploitation (15) est conçue de telle manière que l'unité d'exploitation numérise au moins le signal de garde (GS) et/ou le signal de commande (AS).

12. Dispositif selon au moins l'une des revendications 1 à 11, **caractérisé en ce que** l'unité d'exploitation (15) est conçue de telle manière que l'unité d'exploitation (15) détermine au moins un rapport d'amplitude à partir du signal de garde (GS) et/ou du signal de commande (AS) et du signal de courant et/ou d'un signal de tension électrique en dépendant, et que l'unité d'exploitation (15) détermine et/ou surveille la grandeur de process sur la base du rapport d'amplitude.

13. Dispositif selon au moins l'une des revendications 1 à 12, **caractérisé en ce que**, concernant la grandeur de process, il s'agit du niveau du produit (1).
